# EUROPEAN PATENT APPLICATION

(11) **EP 4 116 263 A1**
(43) Date of publication of application: **11.01.2023**
(21) Application number: 22181586.3
(22) Date of filing: 28.06.2022
(51) Int. Cl.: C02F 1/00, C02F 103/00, E03F 5/14, E03F 5/22, E03F 5/10, E01H 1/10

(54) **METHOD AND APPARATUS FOR TREATING STORM WATER AND FOR MELTING SNOW**

(30) Priority: 30.06.2021 FI 20215774
(71) Applicant: Lumipower Oy, 40320 Jyväskylä (FI)
(72) Inventor: PUROLA, Pekka, 40520 Jyväskylä (FI)
(74) Representative: Berggren Oy

(57) **Abstract**

In the method for treating storm water, storm water is led from the environment into a water treatment unit (10), the storm water is purified in the water treatment unit by removing trash and/or impurities from the storm water and at least part of the purified storm water is returned into the environment. In the method, storm water to be purified is taken from a storm water drain (72), which storm water drain has several storm water wells (74, 75) for receiving storm water and at least one storm water discharge opening, and the purified storm water is returned to the storm water drain before the storm water discharge opening. Storm water is pumped from a storm water drain to a water treatment unit on the ground surface and the purified storm water is allowed to flow from the water treatment unit by gravitation back to the storm water drain. The method is implemented with an apparatus, which has a moveable water treatment unit (10). Part of the storm water, optionally heated, may be mixed with snow to melt the snow.

## Description

### Field of the invention

The invention relates to a method for treating storm water, in which method storm water to be purified is led from a storm water drain to a moveable water treatment unit not belonging to the storm water drain, which storm water drain has several storm water wells for receiving storm water and at least one discharge opening for storm water, the storm water is purified in the water treatment unit by removing trash and/or impurities from the storm water and the purified storm water is returned to the storm water drain before the storm water discharge opening. The invention further relates to an apparatus used in the method.

### Prior art

In cities and urban areas, rainwater and snow melt water are led into a storm water drain, along which the storm water flows into the water system. Along with the storm water, a large amount of different impurities ends up in the water system, among others plastic waste, tree leaves and needles, sand and dust. The amount of impurities contained in the storm water is especially large in the spring, when the trash accrued in the snow over winter is mixed in the snow melting water. In the spring, sand and dust is washed from the streets and sidewalks, whereby a substantial amount of dirty storm water is generated. The water to be used for washing streets and sidewalks must often be retrieved from a long distance, whereby acquiring washing water takes time and generates costs.

Storm water can be led into a common sewage network, whereby it is purified in a sewage treatment plant belonging to the network. Storm water is, however, generated in such large amounts that if it were led into the sewer network, it would cause overloading of the sewer network and sewage treatment plant. Therefore, the storm water is generally led into a water system without purification, whereby the stress on the water system receiving the storm water at the storm water discharge point is great.

A storm water filtering chest, which can be submerged into the ground, is previously known. The filtering chest is manufactured from concrete elements and inside it there are light gravel, biochar and sand filters, through which the storm water is led to flow. Such filters are heavy and large apparatuses to be firmly integrated into the storm water system, the placement of which apparatuses in a city environment is difficult.

Publication US 5405539 A describes a filter solution of a rainwater drain, which includes a filter to be placed inside a box-like rainwater well at the edge of a street. The filter solution described in the publication is meant to be placed in a rainwater well under a sidewalk running along the edge of a street, the inflow opening of which well is situated in the curb stone of the sidewalk. Rainwater flows from the street or from a gutter at the edge of the sidewalk by gravitation to the rainwater well, which is lower than the surface of the gutter.

Publication US 5133619 A describes a filtering arrangement for rainwater, which comprises a box-like basin, in the bottom of which there is a trough, which basin can be placed beside a rainwater well. The filter arrangement comprises a separate filter basket, which can be placed inside a box-like basin, which filter basket is filled with filter material. In the upper edge of the front wall of the filter basket there is an elongated opening, via which rainwater can flow by gravitation into the filter basket, through the filter material into the basin and from the basin onwards into the rainwater well.

Publication US 6106706 A describes a filter arrangement arranged inside a well of a rainwater drain, which arrangement comprises a filter basket manufactured from stainless steel, in the wall of which basket there are holes for rainwater to flow through. The rainwater exits from the filter basket through holes in the basket wall to a well, from where is flows onward to a rainwater drain.

An object of the invention is to provide a method and an apparatus for treating storm water, with which problems related to prior art can be reduced. The objects of the invention are obtained with a method and an apparatus, which are characterized in what is presented in the independent claims. Some advantageous embodiments of the invention are presented in the dependent claims.

### Brief summary of the invention

The invention relates to a method for treating storm water, in which method storm water to be purified is led from a storm water drain to a moveable water treatment unit not belonging to the storm water drain, which storm water drain has several storm water wells for receiving storm water and at least one discharge opening for storm water, the storm water is purified in the water treatment unit by removing trash and/or impurities from the storm water and the purified storm water is returned to the storm water drain before the storm water discharge opening. In the method, storm water is pumped from a storm water drain to a water treatment unit on the ground surface and the purified storm water is allowed to flow from the water treatment unit by gravitation back to the storm water drain.

Advantageously in the method, storm water is led to the water treatment unit from a first storm water well and purified storm water is returned to a second storm water well, which second storm water well is below the first storm water well in the storm water drain in the flow direction of the storm water.

In an advantageous embodiment of the method according to the invention, storm water is purified in the water treatment unit by leading storm water to be purified through a mechanical filter, advantageously an arc filter.

In a second advantageous embodiment of the method according to the invention, storm water is purified in the water treatment unit by leading storm water to be purified into a water tank and letting heavy impurities in the storm water sink to the bottom of the water tank.

In still another advantageous embodiment of the method according to the invention, storm water is purified in the water treatment unit by leading storm water to be purified into a water tank and letting impurities, which are lighter than water, in the storm water rise up to the surface of the storm water in the water tank.

In still another advantageous embodiment of the method according to the invention, purified storm water is used for maintenance, such as washing, of paved streets, sidewalks, bicycle paths, yards and/or parking areas. Alternatively or additionally, purified storm water is used for maintenance of parks and/or green spaces, such as for watering plants and plantations.

In still another advantageous embodiment of the method according to the invention, purified storm water is used for melting snow. Snow to be melted is advantageously moved into a melting tank and purified storm water is led from the water treatment unit into the melting tank into contact with the snow to be melted. At least part of the purified storm water to be led into the melting tank can be heated in the water treatment unit before the storm water is led into the melting tank.

An apparatus for treating storm water comprises a water treatment unit, which water treatment unit is designed to be a unit which can be moved substantially as a whole, which can be moved by a storm water drain and which water treatment unit has a purifying unit for purifying storm water, means for leading storm water to the water treatment unit and means for leading the purified storm water out of the water treatment unit. Said means for leading storm water to the water treatment unit comprise an input pipe to be led from the storm water drain to the water treatment unit and a pump. The pump can be a submersible pump attached to the lower end of the input pipe, which pump is lowered into the storm water drain, or the pump can be in the water treatment unit end of the input pipe.

In one advantageous embodiment of the apparatus according to the invention, said means for leading purified storm water out of the water treatment unit comprise a discharge pipe to be led from the water treatment unit to the storm water drain.

In a second advantageous embodiment of the apparatus according to the invention, the water treatment unit additionally comprises a water tank for storing purified storm water and means for leading purified storm water out of the water tank.

Still another advantageous embodiment of the apparatus according to the invention further comprises a snow melting unit, which has a melting tank for snow to be melted, and the apparatus further comprises pumping means for pumping purified storm water from the water treatment unit to the melting tank. Advantageously, the water treatment unit additionally comprises heating means, advantageously a heat exchanger to be connected to a heat source, for heating the purified storm water to be pumped into the melting tank.

An advantage of the invention is that it can be used to reduce soiling of discharge water systems for storm water drains.

A further advantage of the invention is that it decreases the need for steering storm water to water treatment plants.

A further advantage of the invention is that it can operate in a continuous and unmanned manner around the year, whereby its operating costs are low.

A particular advantage of one embodiment of the invention is that it can be used to reduce washing costs for paved streets, sidewalks, yards and parking areas and to speed up washing.

A particular advantage of a second embodiment of the invention is that it can be used to reduce service and maintenance costs for parks and green spaces. Savings are generated especially as personnel and the need for moving equipment decreases.

A particular advantage of a further embodiment of the invention is that it can be used to reduce costs generated from removing snow. The cost reduction is especially due to the fact that thermal energy contained in the storm water is utilized for melting snow.

### Brief description of the drawings

In the following, the invention will be described in detail. In the description, reference is made to the enclosed drawings, in which
figure 1a shows as an example an apparatus used in the method according to the invention seen from the side,
figure 1b shows the apparatus shown in figure 1a seen from above and
figure 2 shows as an example the method according to the invention with the aid of a flow chart.

### Detailed description of the invention

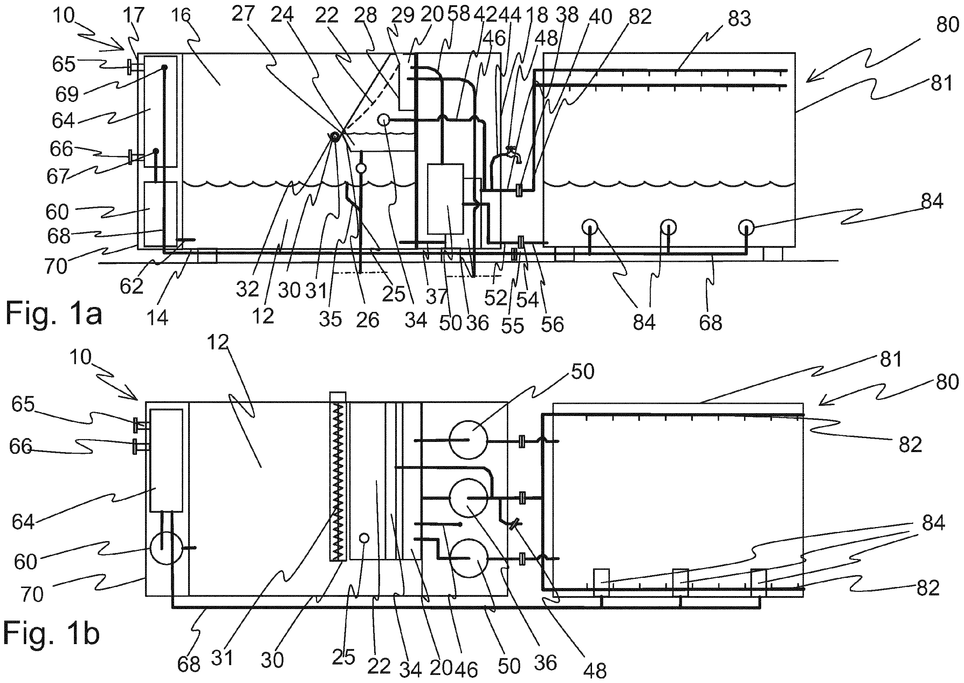

Figure 1a shows as an example an apparatus to be used in the method according to the invention seen from the side, and figure 1b shows the same apparatus from above. In the following both figures are described simultaneously.

The apparatus according to the invention comprises a water treatment unit 10 and a snow melting unit 80. The water treatment unit has a water-tight water tank 12, which has a bottom 14, two side walls 16, a first end wall 17 and a second end wall 18. The water volume of the water tank is advantageously about 5 m³. In order to better show the structure of the water treatment unit, one of the side walls of the water tank has been removed in the figures. Inside the water tank there is a purifying unit, which includes an inlet chamber 20, an arc filter 22 and an intermediate basin 24. The water purifying unit is placed on the second end wall 18 of the water tank, so that the intermediate basin is above the bottom of the water tank at a distance from the bottom of the water tank. The intermediate basin is a trough-like part, which has a substantially even bottom, two end walls, a front wall 26 and a rear wall. The rear wall of the intermediate basin settles against the second end wall 18 of the water tank and attaches thereto. The front wall of the intermediate basin is substantially lower than the end walls and rear wall, whereby the upper edge 27 of the front wall determines the water volume of the intermediate basin.

Above the intermediate basin there is an inlet chamber 20, which has a front walling 28 in the direction of the second end wall 18. The inlet chamber extends by its ends to the end walls of the intermediate basin and by its rear edge to the rear wall of the intermediate basin. The upper edge of the front walling is in the vertical direction lower than the upper edges of the end walls and rear wall of the intermediate basin, so the height of the upper edge of the front walling determines the water volume of the inlet chamber. The upper edge 27 of the front wall 26 of the intermediate basin and the upper edge 29 of the front walling 28 of the inlet chamber 20 are substantially parallel and straight edges.

The arc filter 22 of the water treatment unit is a thin plate with a slightly trough-like shape, which is attached by its first edge to the upper edge 29 of the front walling 28 and by its second edge to the upper edge 27 of the front wall 26. The arc filter is manufactured from a metal plate, advantageously from a stainless or acid-proof steel plate, and it has a group of holes with a small diameter for water to pass through. The diameter of the holes can be dimensioned so that the arc filter can be used for removing trash and impurities with a diameter larger than the holes from the water being treated, such as gravel or sand, tree needles and leaves, paper trash and especially garbage which does not decompose in nature, such as plastic trash. The aim is to make the area of the holes of the arc filter as small as possible, so that as large an amount as possible of microplastics, which are especially harmful for nature, can be removed from the storm water. The diameter of the holes in the arc filter can for example be 0.8 mm or smaller than that, advantageously 0.25 mm or smaller than that. In the space delimited by the arc filter and intermediate basin there is a washer 34, with which the arch filter can be cleaned, if necessary. The washer is a metal pipe, in the wall of which there is a regular perforation, through which a strong water jet can be directed at the lower surface of the arc filter, whereby impurities stuck in the arc filter holes are detached.

In the upper edge 27 of the front wall 26 of the intermediate basin there is a trough 30, which extends over the length of the entire upper edge and attached by its first end to the second side wall 16 of the water tank. Inside the trough there is a reject screw 31 rotated with a motor (motor not shown in the figure), which reject screw extends from the first end of the trough to the second end. The impurities removed from the water being treated flow along the upper surface of the arc filter into the trough, from where they are removed by rotating the reject screw through an opening 32 in the side wall out of the purifying unit in a manner described below. A discharge pipe 25 is connected to the bottom of the intermediate basin, the free end of which pipe, which end is not shown in the figures, is led into the storm water drain in a manner described below. The discharge pipe has an overflow branch 35, along which water can flow from the water tank into the discharge pipe, when the upper surface of the water in the water tank reaches the level of the opening of the overflow branch. The overflow branch prevents the water surface from rising in the water tank 12 higher than the opening of the overflow branch and thus determines the largest water volume of the water tank. Between the overflow branch and the bottom of the intermediate basin there is a valve 23, with which the amount of water flowing from the intermediate basin to the discharge pipe can be adjusted.

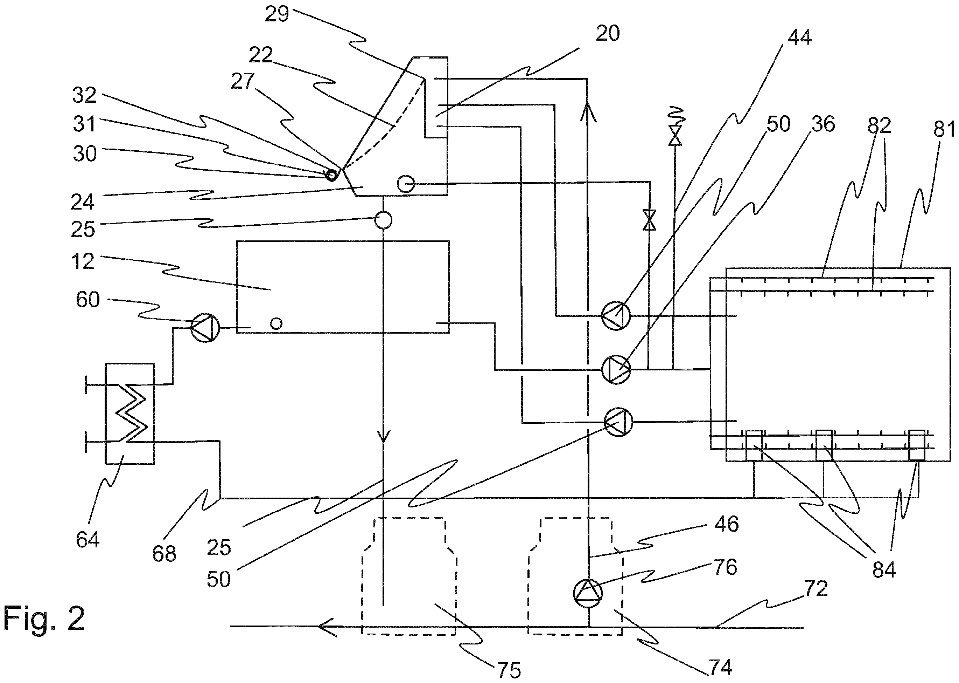

Outside the water tank 12, on the other side of the second end wall 18, there are three pumps in a row (the rearmost pump is not shown in the figure). In figure 1a the outermost pump in the row is shown as moved a bit from its real position to better bring out the pump behind it. The first pump 36 in the middle up the pump row is connected with a suction pipe 37 passing through the second end wall 18 to the water tank 12 close to the bottom 14 of the water tank. The first outlet pipe 38 departing from the first pump connects with the aid of a first flange joint 40 to the end of the melting water pipe 82 of the snow melting unit 80. A rinsing water pipe 42 and service water pipe 44 branch out from the outlet pipe to the section between the first flange joint and the first pump. The rinsing water pipe is connected by its second end to the washer 34, i.e. the first pump produces rinsing water needed by the washer as it runs. The rinsing water pipe has a valve not shown in the figures, which valve is opened when the arc filter needs to be cleaned. In the free end of the service water pipe there is a tap 48, through which purified storm water can be led out of the water tank. Purified storm water can be used for maintenance of paved areas and green spaces and parks, particularly for cleaning streets, yards or parking areas or for watering plantations or plants, as is done in some embodiments of the method according to the invention. The second suction pipes 52 of the second pumps 50 on the edges of the pump row are connected with second flange joints 54 to the ends of emptying pipes 56 leading to the snow melting unit. The second outlet pipes 58 departing from the second pumps are led to the inlet chamber 20. In the vicinity of the pumps there is further an input pipe 46, along which storm water to be cleaned is led into the apparatus. The first end of the input pipe is led to the inlet chamber and the second end not shown in the figures is led to a storm water source, advantageously a storm water well of a storm water network (figure 2).

On the second side of the first end wall 17 of the water treatment unit there is a third pump 60, the third suction pipe 62 of which is led through the first end wall into the water tank 12, close to the bottom 14. Above the third pump there is a heat exchanger 64 attached to the first end wall, which heat exchanger has an inlet connection 65 and an outlet connection 66. The heat exchanger is designed to be connected to a heat source producing warm water, so that warm water is led via the inlet connection into the heat exchanger and when cooled out of the heat exchanger via the outlet connection. The apparatus and method according to the invention are suitable for use with any heat source producing warm water. The heat source can thus for example be an electric powered water heater, a water heater functioning with a solid or liquid fuel, a geothermal heat pump or advantageously a district heating network. The outlet pipe of the third pump 60 is connected to an output coupling 67 of the heat exchanger, and the first end of a heating pipe 68 is connected to an input coupling 69 of the heat exchanger. The second end of the heating pipe branches out into three branches, which are connected to mixers 84 in the snow melting unit 80.

The functional parts and devices of the water treatment unit 10 are placed inside a heat-insulated movable container 70. Inside the container there are heating devices not shown in the figure, with which the temperature inside the container can always be kept above zero degrees Celsius. Due to the heat-insulated container and heating devices, the storm water in the water treatment unit and the devices containing storm water can be kept unfrozen and functional also in freezing times.

The snow melting unit 80 comprises a box-like melting tank 81, which has two end walls, two side walls and a bottom. The volume of the melting tank is advantageously 20-25 m³. To better bring out the structure of the inner parts of the melting tank, the second side wall of the melting tank has been removed in figure 1a. The melting tank further has a lid that can be opened, which is not shown in the figures. In the upper edge of both side walls, there are two melting water pipes 82 on top of each other. The melting water pipes extend through the first end wall outside the melting tank, where they are joined and connected with the first flange joint 40 to the first outlet pipe 30 of the first pump 36. The melting water pipes have, in the section inside the melting tank, nozzles 83 at a distance from each other, which nozzles point toward the middle part of the melting tank. By using the first pump, purified storm water can thus be pumped from the water tank 12 to the melting tank and to the snow to be melted in a particular melting tank.

On the second side wall of the melting tank there are three mixers 84, which are connected to the ends branching out from the heating pipe 68 coming from the heat exchanger 64. The heating pipe has a joint formed by a third flange joint 55. Purified storm water heated in the heat exchanger can thus be led from the water tank 12 via the heating pipe and mixers to the melting tank. The mixers are devices known as such, the structure and operational principle of which is covered in the applicant's Finnish patent application F120205349. With the aid of the mixers, the heated storm water is efficiently mixed into the water in the melting tank and the mixed water mass is set into a flowing motion which promotes melting of the snow inside the melting tank.

Right in the vicinity of the bottom of the melting tank there are two emptying pipes 56, which extend through the first end wall of the melting tank outside the melting tank and are connected with the second flange joints 54 to the second suction pipes 52 of the second pumps 50. By using the second pumps, the water in the melting tank can be pumped to the inlet chamber 20 of the water treatment unit, i.e. the melting tank can, if necessary, be pumped completely empty. This is generally done in wintertime, when all the snow intended to be melted has been melted, whereby the use of the apparatus for melting snow is interrupted at least momentarily. Emptying the melting tank can thus be used to prevent water in the melting tank from freezing, which could break the apparatus.

The water treatment unit 10 and the melting unit 80 are connected together with first, second and third flange joints 40, 54, 55. The flange joints can, if necessary, be opened and the pipes leading to them can be closed with valves not shown in the figures, whereby the water treatment unit 10 and the melting unit 80 detach from each other. Due to the detachment possibility, the units can be placed at a desired distance from each other and joined together with separate intermediate pipes not shown in the figures. Detaching also makes possible the transporting of units to the use target and away from there as separate units. In the spring, summer and fall, when the apparatus is not used for melting snow, the water treatment unit of the apparatus can be used on its own for purifying storm water and for producing service water and for maintenance needs for street areas and green spaces. The snow melting unit can thus be moved temporarily into storage to wait for snow.

The apparatus described above further comprises an electric system not shown in the figures and an automatic control unit for controlling and monitoring the operation of the electric devices belonging to the apparatus. The control unit is advantageously placed in the water treatment unit. The electric system of the apparatus can be connected with electric wires to the general electrical network, and it can additionally comprise a backup power source, such as a battery system, on which the apparatus remains operational also during short power failures. Due to the automatic control unit of the apparatus, the apparatus can operate continuously and unmanned for long times. The apparatus can be equipped with measuring devices, which are used to measure the quality of the storm water entering the apparatus and the purified storm water exiting the apparatus. The measuring results can be delivered to the client in order to monitor the operation of the apparatus.

Figure 2 shows as an example the use of the method according to the invention with the aid of a flow chart. The method according to the invention uses the apparatus shown in figures 1a and 1b. The apparatus is transported and placed by a storm water drain 72, close to some first storm water well 74 belonging to the drain. The apparatus according to the invention can be used either only for purifying storm water, for melting snow, or simultaneously for both.

When storm water is purified with the method according to the invention, a submersible pump 76, which is lowered into the first storm water well 74, is connected to the end of the input pipe 46 belonging to the apparatus. The free end of the discharge pipe 25 of the apparatus is led to a second storm water well 75, which is below the first storm water well in the flow direction of the storm water. The submersible pump is started, whereby it pumps storm water to the inlet chamber 20 of the water treatment unit. As the inlet chamber fills up with storm water pumped into it, storm water starts to flow over the upper edge 29 of its front walling onto the upper surface of the arc filter 22, from where it flows through the holes of the arc filter into the intermediate basin 24. The trash filtered by the arc filter flow into the trough 30, from where the reject screw 31 transports them through the opening 32 outside the apparatus to be transported away. Purified storm water is led from the intermediate basin along the discharge pipe to the second storm water well 75. The method is thus used to remove solid trash and impurities from the storm water flowing in the storm water drain by leading the storm water through a mechanical filter and return the purified storm water back into the storm water drain. The apparatus used in the method is designed to operate unmanned and automatically, whereby it can function as a continuous purifying apparatus for storm water independently for very long times.

In one advantageous embodiment of the method, the flow of storm water through the discharge pipe is limited and adjusted with a valve 23, so that a part of the purified storm water is allowed to flow from the intermediate basin 24 over the upper edge 27 into the water tank 12. For example 5 m³ of purified storm water can be stored in the water tank. When the water tank is full, the purified storm water is steered with the valve to flow from the intermediate basin in its entirety along the discharge pipe into the storm water drain. In this embodiment of the invention, the water tank functions as a storage for purified storm water, from where purified storm water can be pumped along a first service water pipe 44 to be used as service water for maintenance needs of street and park areas. Purified storm water can be used for example for washing paved streets, sidewalks, yards and parking areas. Alternatively or additionally, purified storm water can be used for watering plants and plantations in parks and green spaces.

In a second embodiment of the method according to the invention, the apparatus is used for melting snow. In this embodiment, a snow melting unit is connected to the water treatment unit and a hose is attached to the second end of the overflow pipe 86 of the melting tank 81 (figure 1b), which hose is led to the second storm water well 75 of the storm water network. The heat exchanger of the water treatment unit is connected to a heat source, advantageously to the district heating network. The so-called starting melting water needed for melting snow is brought from the first storm water well 74 with the aid of a submersible pump 76 and input pipe 46 into the inlet chamber 20, from where it flows in a purified state to the water tank 12. The temperature of the storm water flowing in the storm water drain also in winter is clearly above zero, whereby it contains thermal energy, which is utilized in the method for melting snow. The use of storm water thus improves the energy efficiency of the apparatus used for melting snow.

In the method, snow to be melted is collected from the vicinity of the apparatus and the snow is transported into the melting tank 81 of the apparatus. Purified storm water is pumped with the first pump 36 to melting water pipes 82 of the melting tank 81, from where it is sprayed through nozzles onto the snow in the melting tank, whereby the snow melts into water. Part of the purified storm water in the water tank 12 is pumped with the third pump 60 through the heat exchanger 64 into the heating pipe 68, from where it flows via the mixers 84 to the melting tank. The storm water, which has been heated up in the heat exchanger, raises the temperature of the water in the mixing tank, whereby the snow melts more efficiently in the melting tank. As the snow melts, the water surface in the melting tank rises, whereby water exits the melting tank along the overflow pipe 86 into the storm water drain. Snow melting is continued for as long as there is snow to melt. When the snow is gone, the melting tank is emptied substantially completely by pumping the water in the melting tank with the second pumps 50 into the water treatment unit 10.

Some advantageous embodiments of the method and apparatus according to the invention have been described above. The invention is not limited to the solutions described above, but the inventive idea can be applied in different ways within the scope of the claims.

| | | | |
|---|---|---|---|
| **List of reference numbers:** | | 46 | input pipe |
| 10 | water treatment unit | 48 | tap |
| 12 | water tank | 50 | second pump |
| 14 | bottom | 52 | second suction pipe |
| 16 | side wall | 54 | second flange joint |
| 17 | first end wall | 55 | third flange joint |
| 18 | second end wall | 56 | emptying pipe |
| 20 | inlet chamber | 58 | second outlet pipe |
| 22 | arc filter | 60 | third pump |
| 23 | valve | 62 | third suction pipe |
| 24 | intermediate basin | 64 | heat exchanger |
| 25 | discharge pipe | 65 | inlet connection |
| 26 | front wall | 66 | outlet connection |
| 27 | upper edge of front wall | 67 | output coupling |
| 28 | front walling | 68 | heating pipe |
| 29 | upper edge of front walling | 69 | input coupling |
| 30 | trough | 70 | container |
| 31 | reject screw | 72 | storm water drain |
| 32 | opening | 74 | first storm water well |
| 34 | washer | 75 | second storm water well |
| 35 | overflow branch | 76 | submersible pump |
| 36 | first pump | 80 | snow melting unit |
| 37 | first suction pipe | 81 | melting tank |
| 38 | first outlet pipe | 82 | melting water pipe |
| 40 | first flange joint | 83 | nozzle |
| 42 | rinsing water pipe | 84 | mixer |
| 44 | service water pipe | | |

## Claims

1. A method for treating storm water, in which method storm water to be purified is led from a storm water drain (72) to a moveable water treatment unit (10) not belonging to the storm water drain, which storm water drain (72) has several storm water wells (74, 75) for receiving storm water and at least one storm water discharge opening, the storm water is purified in the water treatment unit (10) by removing trash and/or impurities from the storm water and the purified storm water is returned to the storm water drain (72) before the storm water discharge opening, **characterized in that** storm water is pumped from the storm water drain (72) to the water treatment unit (10) on the ground surface and the purified storm water is allowed to flow from the water treatment unit (10) by gravitation back into the storm water drain.

2. The method according to claim 1, **characterized in that** storm water is led to the water treatment unit (10) from a first storm water well (74) and purified storm water is returned to a second storm water well (75), which second storm water well (75) is below the first storm water well (74) in the storm water drain (72) in the flow direction of the storm water.

3. The method according to any of the claims 1-2, **characterized in that** storm water is purified in the water treatment unit (10) by leading storm water to be purified through a mechanical filter, advantageously an arc filter (22).

4. The method according to any of the claims 1-3, **characterized in that** storm water is purified in the water treatment unit (10) by leading storm water to be purified into a water tank (12) and letting heavy impurities in the storm water sink to the bottom of the water tank (12).

5. The method according to any of the claims 1-4, **characterized in that** storm water is purified in the water treatment unit (10) by leading storm water to be purified into a water tank (12) and letting impurities, which are lighter than water, in the storm water rise up to the surface of the storm water in the water tank (12).

6. The method according to any of the claims 1-5, **characterized in that** purified storm water is used for maintenance, such as washing, of paved streets, sidewalks, bicycle paths, yards and/or parking areas.

7. The method according to any of the claims 1-6, **characterized in that** purified storm water is used for maintenance of parks and/or green spaces, such as for watering plants and plantations.

8. The method according to any of the claims 1-7, **characterized in that** purified storm water is used for melting snow.

9. The method according to claim 8, **characterized in that** snow to be melted is moved into a melting tank (81) and purified storm water is led from the water treatment unit (10) into the melting tank (81) into contact with the snow to be melted.

10. The method according to claim 9, **characterized in that** at least part of the purified storm water to be led into the melting tank (81) is heated in the water treatment unit (10) before the storm water is led into the melting tank (81).

11. An apparatus for treating storm water, which apparatus comprises a water treatment unit (10), which water treatment unit (10) is designed as a unit moveable substantially as a whole, which can be moved by a storm water drain (72) and which water treatment unit (10) has a purifying unit for purifying storm water, means for leading storm water to the water treatment unit (10) and means for leading the purified storm water out of the water treatment unit (10), **characterized in that** said means for leading storm water to the water treatment unit (10) comprise an input pipe (46) to be led from the storm water drain (72) to the water treatment unit (10) and a pump, advantageously a submersible pump (76) to be lowered into the storm water drain (72).

12. The apparatus according to claim 11, **characterized in that** said means for leading purified storm water out of the water treatment unit (10) comprise a discharge pipe (25) to be led from the water treatment unit (10) to the storm water drain (72).

13. The apparatus according to claim 11 or 12, **characterized in that** the water treatment unit additionally comprises a water tank (12) for storing purified storm water and means for leading purified storm water out of the water tank (12).

14. The apparatus according to any of the claims 11-13, **characterized in that** it further comprises a snow melting unit (80), which snow melting unit (80) has a melting tank (81) for snow to be melted, and the apparatus further comprises pumping means for pumping purified storm water from the water treatment unit (10) to the melting tank (81).

15. The apparatus according to claim 14, **characterized in that** the water treatment unit additionally comprises heating means, advantageously a heat exchanger (64) to be connected to a heat source, for heating the purified storm water to be pumped into the melting tank (81).
